# EUROPEAN PATENT APPLICATION

(11) **EP 2 352 250 A1**
(43) Date of publication of application: **03.08.2011**
(21) Application number: 09828555.4
(22) Date of filing: 25.05.2009
(51) Int. Cl.: H04L 7/00

(54) **TIME SYNCHRONIZATION METHOD AND APPARATUS**

(30) Priority: 29.11.2008 CN 200810179540
(71) Applicant: ZTE Corporation, Shenzhen, Guangdong 518057 (CN)
(72) Inventor: HE, Li, Shenzhen Guangdong 518057 (CN); YU, Zhiyong, Shenzhen Guangdong 518057 (CN); SU, Hui, Shenzhen Guangdong 518057 (CN)
(74) Representative: Le Forestier, Eric
(86) International application number: PCT/CN2009/071965
(87) International publication number: WO 2010/060294

(57) **Abstract**

The present invention discloses a time synchronization method and apparatus. The method comprises: each net element node locks a clock synchronization signal of its upper-level net element node through a physical channel, and a clock synchronization network is established; and each net element node performs time counting by using the locked clock synchronization signal and performs time compensation according to the time counting through a time synchronization protocol to realize time synchronization. Through the present invention, each net element node performs the time counting by using the locked clock signal, and performs the time compensation according to the time counting to realize the time synchronization, thus the problem that the accumulative effect of phase transfer results in very obvious phase delay in the related technologies is solved, so as to reduce the phase delay and realize high precision, high interference resistance and reliability.

## Description

### TECHNICAL FIELD

The present invention relates to the field of communications, particularly to a time synchronization method and a time synchronization apparatus.

### BACKGROUND

At present, there are two kinds of synchronization for equipment in a communication network. One is frequency synchronization, i.e., signals of a source terminal and that of a destination terminal keep a specific relationship in frequency or phase; that is to say, frequency of the source terminal and that of the destination terminal keep same within a certain precision and in phase difference is constant. The frequency synchronization is generally called clock synchronization, for example, a synchronous Ethernet, E1 interface clock synchronization, and so on. The other is time synchronization, i.e., the source terminal and the destination terminal are not only identical in frequency but also in phase, and have identical time counting scales.

The frequency synchronization and the time synchronization are two levels of time synchronization requirement of wireless networks. Wireless systems based on Time Division Duplex (TDD) mode, including Code Division Multiple Access (CDMA) 200, Time Division-Synchronous Code Division Multiple Access (TD-SCDMA) and Worldwide Interoperability for Microwave Access (WiMAX) corresponding versions, require strict time synchronization to ensure that cell handover can be completed smoothly. At present, the frequency synchronization can be solved through the allocation of terrestrial clock signals, while the time synchronization is mainly realized by a Global Position System (GPS) module arranged in a base station tracking Universal Time Coordinated (UTC) time service.

The frequency synchronization can be realized by each net element sequentially locking clock synchronization signals (such as E1, a synchronous Ethernet, a Synchronous Transmission Module level n (STM-N), and so on). The clock of each net element node and other fixed frequency sources jointly form a frequency (clock) synchronous network. The time synchronization is mainly realized by GPS time service or by adjusting time deviation between a master clock and a slave clock according to a time synchronization protocol (such as IEEE 1588-2008, NTP, etc.). The frequency synchronization between the master clock and the salve clock can also be realized by the time synchronization protocol. At present, Packet Transfer Network (PTN) equipment realizes the frequency and time synchronizations in a network through a Precision Time Protocol (PTP or 1588 hereinafter) of IEEE 1588-2008 to solve the problem of substitute for the GPS in the base station.

However, the time transfer technologies for realizing the PTP function adopted by many manufacturers are not associated with the frequency synchronization network, that is to say, the current frequency synchronization network can realize network clock synchronization but never realize the precision time synchronization.

### SUMMARY

The present invention is disclosed in order to solve the problem that the accumulative effect of phase transfer results in very obvious time delay and unreliability in the related technologies. Therefore, the present invention aims to provide a time synchronization method and a time synchronization apparatus to solve the above-mentioned problem.

To solve the above-mentioned problem, the present invention discloses a time synchronization method, and the method comprises:
each net element node locks a clock synchronization signal of its upper-level net element node through a physical channel, and a clock synchronization network is established; and
each net element node performs time counting by using the locked clock synchronization signal and performs time compensation according to the time counting through a time synchronization protocol to realize time synchronization.

Furthermore, in the above-mentioned method, the step of performing time compensation according to the time counting to realize time synchronization may comprise:
setting the time counting to be a time counting scale, and performing the time compensation according to the time counting scale to realize the time synchronization.

Wherein when a clock of a net element node among the net element nodes is switched, the method may further comprise:
the time compensation of the net element node is stopped, and the net element node performs the time counting by using a clock synchronization signal generated by a fixed and stable frequency source rather than the locked clock synchronization signal.

When the clock of the net element node is switched, the method may further comprise:
the net element node performs the time counting by using a relocked clock synchronization signal and performs the time compensation to the net element node.

Furthermore, in the above-mentioned method, a lower-level net element node, which is connected with an upper-level net element node incapable of providing a clock synchronization signal, may calibrate and operate a time signal of its local clock according to a message including time information from the upper-level net element node and clock frequency of the lower-level net element node.

The present invention also discloses a time synchronization apparatus, and the apparatus comprises a locking module, a first counting module and a compensating module which are sequentially connected, wherein
the locking module is used for locking a clock synchronization signal of an upper-level net element node through a physical channel;
the first counting module is used for performing time counting by using the locked clock synchronization signal; and
the compensating module is used for performing time compensation according to the time counting through a time synchronization protocol to realize time synchronization.

Furthermore, in the above-mentioned apparatus, the compensating module may comprise a setting sub-module and a compensating sub-module connected with each other;
the setting sub-module is used for setting the time counting to be a time counting scale; and
the compensating sub-module is used for performing the time compensation according to the time counting scale to realize the time synchronization.

Wherein the apparatus may further comprise a first control module connected with the compensating module,
the first control module is used for controlling whether to perform the time compensation to a net element node; wherein, when a clock of a net element node is switched, the first control module controls the compensating module to stop performing the time compensation to the net element node.

The apparatus may further comprise a second control module connected with the first counting module, and a second counting module connected with the second control module,
the second control module is used for controlling whether to perform the time counting by using the locked clock synchronization signal; and
the second counting module is used for performing the time counting by using a clock synchronization signal generated by a fixed and stable frequency source under the condition that the second control module determines not to use the locked clock synchronization signal to perform the time counting.

Furthermore, the apparatus may further comprise:
a recovery module which is used for recovering a clock according to a message including time information from an upper-level net element node incapable of providing a clock synchronization signal; and
a calibrating module which is used for calibrating and operating a time signal of a local clock according to clock frequency recovered by the recovery module.

Through the present invention, each net element node performs the time counting by using the locked clock signal and performs the time compensation according to the time counting to realize the time synchronization, thus the problem that the accumulative effect of phase transfer results in very obvious phase delay in the related technologies is solved, so as to reduce the phase delay and realize high precision, high interference resistance and reliability.

### BRIEF DESCRIPTION OF THE DRAWINGS

Fig. 1 is a flowchart of a time synchronization method according to an embodiment of the present invention;
Fig. 2 is a detailed flowchart of a time synchronization method according to an embodiment of the present invention;
Fig. 3 is a first schematic diagram of a time synchronization method according to an embodiment of the present invention;
Fig. 4 is a second schematic diagram of a time synchronization method according to an embodiment of the present invention;
Fig. 5 is a third schematic diagram of a time synchronization method according to an embodiment of the present invention;
Fig. 6 is a structural block diagram of a time synchronization apparatus according to an embodiment of the present invention; and
Fig. 7 is a detailed structural block diagram of a time synchronization apparatus according to an embodiment of the present invention.

### DETAILED DESCRIPTION

### Functional Overview

In order to solve the problem that the accumulative effect of phase transfer will result in very obvious phase delay in the related technologies, embodiments of the present invention provide a time synchronization method and a time synchronization apparatus, which can realize time network synchronization on the basis of a clock synchronization network, and realize the compatibility between an edge node and a non-clock synchronization network so as to reduce the phase delay. It should be noted that, if there is no conflict, embodiments in the present application and characteristics in the embodiments can be combined with one another. The present invention is described below with reference to the drawings and the embodiments in detail.

### Method embodiments

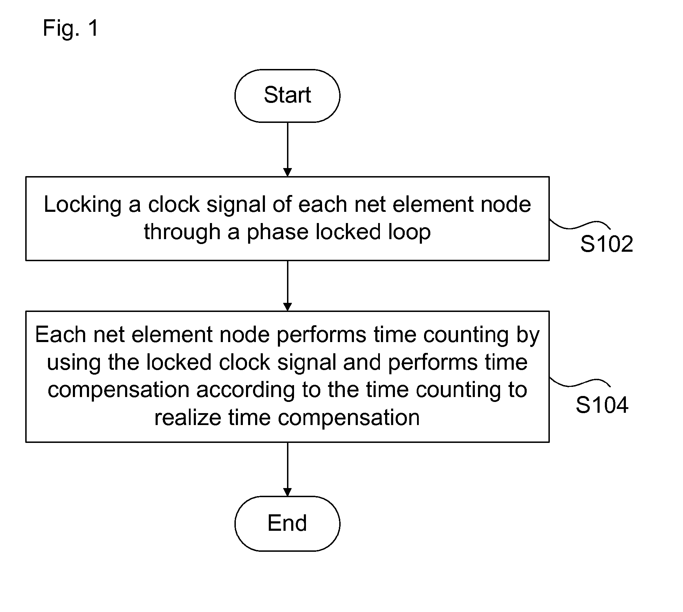

According to an embodiment of the present invention, a time synchronization method is provided. Fig. 1 is a flowchart of a time synchronization method according to an embodiment of the present invention. It should be noted that, the steps of method described below can be executed, for example, in a computer system of a group of computer-executable instructions. Furthermore, although the logic orders are illustrated in Fig. 1, the illustrated or described steps can be executed in orders different from the orders herein under some circumstances. As shown in Fig. 1, the method mainly comprises the following steps (S102 and S104), specific steps are as follows.

S102, each net element node transmits frequency information through a physical channel (such as a synchronization Ethernet link), through a phase locked loop, each net element node locks a clock synchronization signal of an upper-level net element node (hereinafter also referred to a master node or an upstream net element node) or to a stable clock synchronization signal output by a fixed frequency source, and a frequency synchronization network is established.

S104, each network element node performs time counting by using the locked clock synchronization signal and performs time compensation according to the time counting through a time synchronization protocol (such as the PTP) to realize time synchronization, i.e., setting the time counting to be a time counting scale, and performing the time compensation according to the time counting scale to realize the time synchronization.

Through the embodiment, each net element node performs the time counting by using the locked clock synchronization signal and performs the time compensation according to the time counting to realize the time synchronization, thus the problem that the accumulative effect of phase transfer will result in very obvious phase delay in the related technologies is solved and the phase delay is reduced.

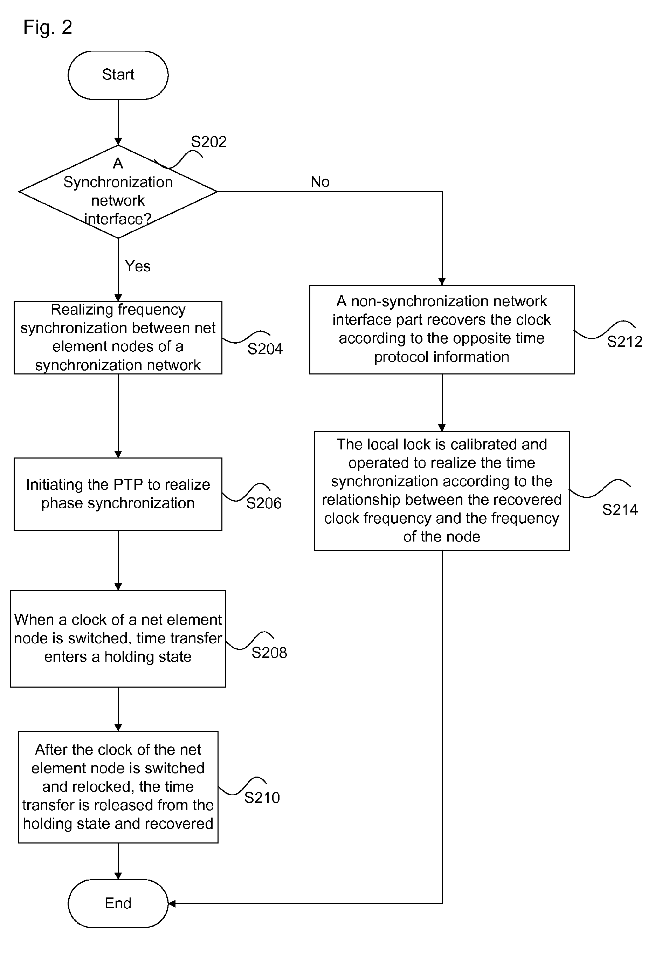

Fig. 2 is a detailed flowchart of a time synchronization method according to an embodiment of the present invention. As shown in Fig. 2, the method specifically comprises the following steps (S202 to S214).

S202, a net element node judges whether its interface is a frequency synchronization network interface; if yes, S204 is executed; otherwise, S212 is executed.

In this step, in order to be compatible with other networks, the net element node judges whether its interface is a frequency synchronization network interface; if its interface is a frequency synchronization network interface, then the technical solution of the present invention is adopted for processing; otherwise, the prior art is adopted for processing when its interface is a non-frequency synchronization network interface, as shown in S212 to S214.

S204, frequency synchronization between net element nodes of a synchronization network is realized, i.e., a locking module is used to track and lock clock synchronization signal to establish the frequency synchronization between net element nodes (i.e., step S102).

S206, the PTP is initiated to realize phase synchronization. Specifically, after the clock of the net element node is locked, the net element node performs time counting by using the locked clock synchronization signal, sets the time counting to be a time counting scale by taking certain standard starting time as reference time, and performs time compensation to the net element node through a time synchronization protocol interaction (such as PTP) to realize time synchronization (i.e., step S104).

In this step, the net element node performs the time counting by using the locked clock synchronization information (i.e., synchronized frequency), by taking certain standard starting time (such as, UTC epoch or TAI epoch) as the reference time, determines time stamp 1 of locally sending message 1588 message (i.e., the time deviation between current time determined by the time counting and the reference time), extracts time stamp 2 form received 1588 message, extracts time stamp 3 of locally receiving 1588 message, and performs the time compensation to the net element node according to these time stamp information and the time synchronization protocol to realize the time synchronization.

S208, when a clock of a net element node is switched, the net element enters a time holding state and does not perform time transfer.

Specifically, when the clock of one net element node among the net element nodes is switched, the clock enters a relocking process, and the time compensation of the net element node by the time synchronization protocol is stopped; the time counting frequency of the net element node is obtained from a fixed and stable frequency source rather than a phase locked loop; i.e., the net element node performs the time counting by using the fixed and stable frequency source rather than the locked clock synchronization signal, and the time transfer enters the holding state and does not track a network reference time any longer.

In other embodiments, if no clock of any net element node is switched, the time synchronization of the whole network is completed by only executing steps S202, S204 and S206.

S210, after the clock of the net element node is switched and relocked, the time transfer is released from the holding state; i.e., a time network is released from the holding state, the net element node performs the time counting by using the synchronized frequency again to provide a time counting scale for the time synchronization protocol and recovers time tracking transfer. That is to say, after the clock of the net element node is switched, the net element node performs the time counting by using a relocked clock synchronization signal and performs phase compensation to the net element node, and the process is ended.

S212, a non-frequency synchronization network interface part recovers the clock according to the opposite time protocol information (such as 1588).

In this step, net element nodes of the non-frequency synchronization network interface can recover clocks according to the opposite time protocol information in the prior art.

S214, the time of a local clock is calibrated and operated to realize the time synchronization according to the relationship between the recovered clock frequency and the frequency of the net element node.

That is to say, as to a downstream net element node (also called lower-level net element node) which is connected with an upstream net element node (also called upper-level net element node) incapable of locking a clock synchronization signal, it calibrates and operates the time signal of the local clock according to the relationship between a message including time information from the upstream net element node and the clock frequency of the downstream net element node.

Through the embodiment, a 1588 time transfer method based on the frequency synchronization is provided. The method greatly reduces phase transfer errors between nodes and effectively reduces phase errors of large-scale networking when networking with non-frequency synchronization PTP nodes.

The implementation process of the embodiments is described below in conjunction with examples in detail.

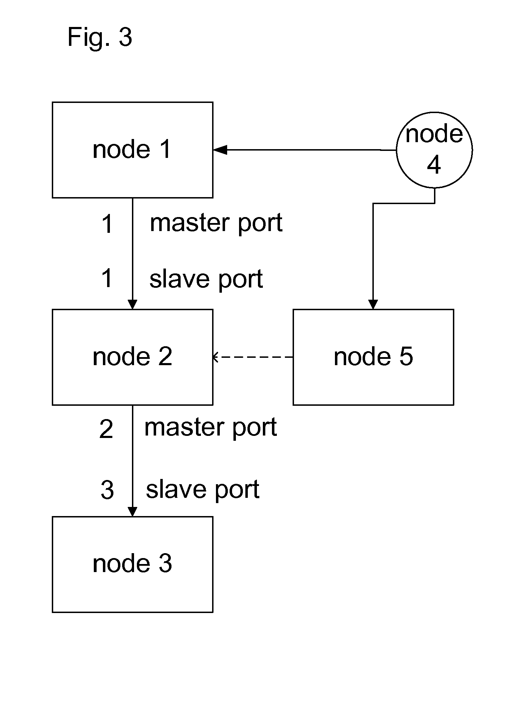

Fig. 3 is a first schematic diagram of a time synchronization method according to an embodiment of the present invention. As shown in Fig. 3, net element nodes 1, 2, 3 and 5 are respectively PTN equipment, node 4 is a fixed clock source.

Wherein the net element node PTN equipment takes a locking module as a clock generator; and the locking module supports all the functions of a Digital Phase Locked Loop (DPLL) including phase discrimination, filtration, oscillation and frequency division of the phase locked loop, and can automatically complete the functions such as reference source monitoring, detection and switching of the running state of the loop, parameter setting of the loop and the like. An external Temperature Control Crystal Oscillator (TCXO) is the reference source of the DPLL and the basis for the stable running of the whole system.

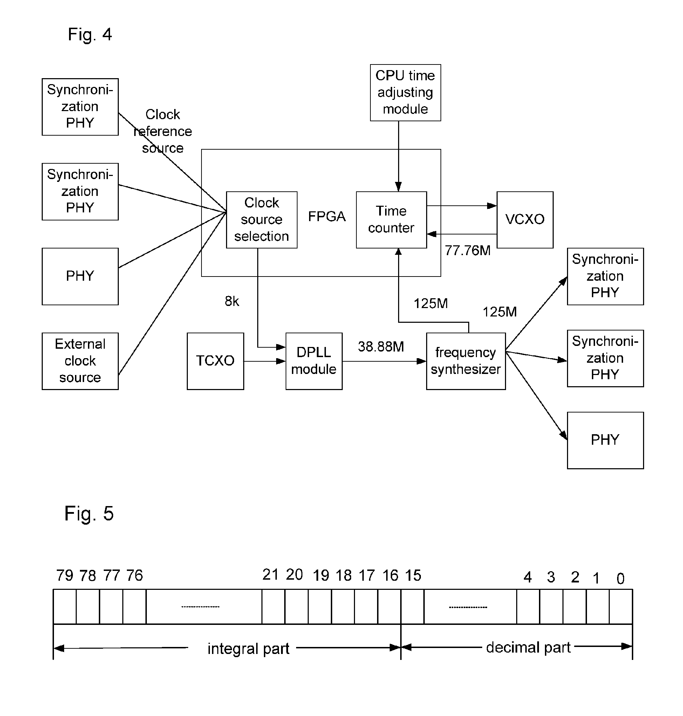

Fig. 4 is a second schematic diagram of a time synchronization method according to an embodiment of the present invention. As shown in Fig. 4, a Field Programmable Gate Array (FPGA) logic completes selection of a reference source and cooperatively completes de-jittering processing. The FPGA logic and an external Voltage Control Crystal Oscillator (VCXO) form an analogue phase locked loop to perform de-jittering to a 38.88M clock of the locking module. The de-jittered 38.88M clock is sent to a frequency synthesizer to generate 25M and 125M clocks required by a mainboard synchronous Ethernet interface. A 125M signal is used as a time counting signal.

The working frequency of the clock synchronization signal is 125M and each clock has a length unit of 8ns, i.e., the minimum unit of the time counting scale. The time counting scales of net element nodes in a clock synchronization network are consistent. The working time of the net element node is counted by an 80-bit (10 bytes) counter which performs operation of adding 1 under the drive of the clock synchronization signal. The embodiment takes 1588 (PTP) as the time transfer protocol, upon which the time stamp is a time deviation value. By taking certain standard starting time (UTC epoch or TAI epoch) as the reference time, the time deviation between the current time and the reference time is given, and its unit is ns.

Fig. 5 is a third schematic diagram of a time synchronization method according to an embodiment of the present invention. As shown in Fig. 5, in the 80-bite counter, the bits below 16 bit are decimal parts, i.e., less than 1 ns; and the bits above 64 bit are integer parts, i.e., the integral multiple of 1 ns.

The implementation process of the embodiment is described below in conjunction with Figs. 3-5 in detail. The time synchronization method comprises the following steps according to the embodiment of the present invention.
1. The clocks of net element nodes are configured to be locked to net element node 4 in a stepwise manner, i.e., the clock of net element node 1 is locked to net element node 4; the clock of net element node 2 is locked to net element node 1; the clock of net element node 3 is locked to net element node 2; after the frequency synchronization, the time counting scales of the net element nodes 1, 2 and 3 are consistent (i.e., step S102). Before the time compensation through the 1588, the net element nodes 1, 2 and 3 have fixed time differences.
2. With an intermediate node as a boundary mode, net element node 1 is configured as 1588 time source, port 1 of net element node 1 is configured as a master port of the 1588, port 1 of net element node 2 is configured as a slave port of the 1588, port 2 of net element node 2 is configured as a master port of the 1588, and port 3 of net element node 3 is configured as a slave port of the 1588, i.e., net element node 3 tracks the time of net element node 2 and net element node 2 tracks the time of net element node 1.
3. Each Ethernet interface of the net elements supports the 1588 protocol. Each port extracts the time of the received and sent 1588 messages; the precision of the time stamp depends on a counter of a net element node; the extracted time stamp information is submitted to a 1588 protocol processing module of the net element node; the time compensation value between each slave node (also called lower-level net element node) and each master node (also called upper-level net element node) is calculated; the time deviation of the salve node is compensated to realize the consistent slave time and master time (i.e., step S104). As shown in Fig. 3, net element node 1 is the upper-level net element node of net element node 2; net element node 2 is the lower-level net element node of net element node 1.
4. When the clock source of the net element node is switched, for example, when a malfunction occurs in the connection between net element nodes 1 and 2, the clock time source of net element node 2 needs to be provided by net element node 5, and the phase locked loop of net element node 2 re-locks the clock source of net element node 5. In the process of capture and locking, 125M clock signal output by the locking module has a frequency fluctuation, which will cause a certain deviation of a time counting unit with respect to 8ns, so there is a difference between the calculated time of the net element node and the time of the master node. If the difference is continuously transferred to the next net element node, the fluctuation of a time network will be caused. Therefore, when the clock is switched, the time counting of the node will be switched to the frequency generated by a fixed crystal oscillator in the net element node, and the PTP is closed, the time change of the master node is not tracked and time information is not allocated to the downstream node any longer. The time of the net element node enters the holding state. Depending on the precision of the own oscillator, the time of the net element node is counted before being switched.
5. After the clock of the net element node is switched, the slaver node is re-locked, and the system frequency returns to be stable again, the net element node reuses the synchronized frequency to perform the time counting and provide the time counting scale for the time synchronization protocol, recovers the time tracking and transfer and publishes time information to the downstream nodes.
6. When the net element node docks a node of a non-frequency synchronization network, the clock is recovered according to the SYNC message of the opposite 1588, then the local clock is calibrated and operated according to the relationship between the recovered clock frequency and the frequency of the node to realize the time synchronization of the 1588.
7. If the intermediate node is in the transparent transmission mode, the precision of the time transfer will be further improved.

Through the above-mentioned embodiments, the time synchronization method based on the synchronization network is provided to make the synchronization frequency as the basis of the time synchronization protocol so as to greatly reduce the phase difference of large-scale networking time transfer.

### Apparatus embodiment

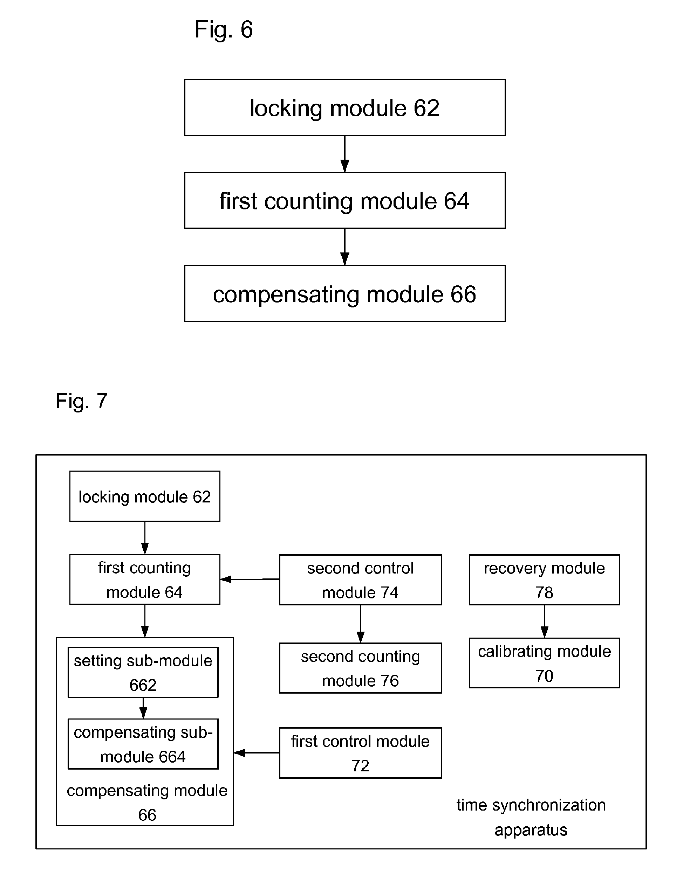

According to an embodiment of the present invention, a time synchronization apparatus is provided. Fig. 6 is a structural block diagram of a time synchronization apparatus according to an embodiment of the present invention. As shown in Fig. 6, the apparatus comprises: a locking module 62, a first counting module 64 and a compensating module 66, which are described below in detail.

The locking module 62 is used for locking a clock signal of each net element node through a phase locked loop; the first counting module 64 is connected to the locking module 62 and used for performing time counting by using a clock synchronization signal locked by the locking module 62; and the compensating module 66 is connected to the first counting module 64 and used for performing time compensation to realize time synchronization according to the time counting of the first counting module 64.

Through the embodiment, the time synchronization apparatus capable of realizing frequency and phase synchronizations is provided.

Fig. 7 is a specific block diagram of a time synchronization apparatus according to an embodiment of the present invention. As shown in Fig. 7, the compensating module 66 comprises a setting sub-module 662 which is used for setting the time counting to be a time counting scale of a time stamp, and a compensating sub-module 664 which is connected to the setting sub-module 662 and used for performing the time compensation to realize the time synchronization according to the time counting scale set by the set sub-module 662.

The apparatus further comprises: a first control module 72, a second control module 74, a second counting module 76, a recovery module 78 and a calibrating module 70, which are described below in detail.

The first control module 72 is connected to the compensating module 66 and used for controlling whether the compensating module 66 should perform the time compensation to a net element node; when a clock of a net element node is switched, the compensating module 66 is controlled to stop performing the time compensation to the net element node.

The second control module 74 is connected to the first counting module 64 and used for controlling whether to perform the time counting by using a clock synchronization signal; when the clock of a net element node is switched, the first counting module 64 is controlled to stop performing the time counting by using the clock synchronization signal. The second counting module 76 is connected to the second control module 74 and used for performing the time counting by using a fixed and stable frequency source under the condition that the second control module 74 determines not to use the clock synchronization signal to perform the time counting.

The recovery module 78 is used for recovering a clock according to time information from a net element node incapable of locking a clock synchronization signal. The calibrating module 70 is connected to the recovery module 78 and used for calibrating and operating a clock signal according to the clock frequency recovered by the recovery module 78.

To sum up, through the above-mentioned embodiments of the present invention, the phase locked loop of each net element node performs the time counting by using the locked clock synchronization signal and also performs the time compensation according to the time counting to realize the time synchronization by a certain time synchronization protocol (such as the PTP), thus the problem that the accumulative effect of phase transfer results in very obvious phase delay in the related technologies is solved, and the phase delay is reduced.

Obviously, those skilled in the art shall understand that the modules or steps of the present invention may be implemented by general computing apparatus and centralized in a single computing apparatus or distributed in a network consisting of multiple computing apparatus. Optionally, the modules or steps may be realized by program codes executable by the computing apparatus, so that they may be stored in a storage apparatus and executed by the computing apparatus, or respectively made into integrated circuit modules or a single integrated circuit module. So the present invention is not limited to any specific combination of hardware and software.

The above descriptions are only preferred embodiments of the present invention and not used for limiting the present invention. For those skilled in the art, the present invention may have various modifications and changes. Any modifications, equivalent replacements, improvements and the like within the principle of the present invention shall fall within the scope of protection of the present invention.

### INDUSTRIAL APPLICABILITY

In the technical solution of the present invention, each net element node performs the time counting by using the locked clock synchronization signal and performs the time compensation according to the time counting to realize the time synchronization, thus the problem that the accumulative effect of phase transfer results in very obvious phase delay in the related technologies is solved, so as to reduce the phase delay and realize high precision, high interference resistance and reliability.

## Claims

1. A time synchronization method, comprising:
each network element node locking a clock synchronization signal of its upper-level net element node through a physical channel, and a clock synchronization network being established; and
each network element node performing time counting by using the locked clock synchronization signal and performing time compensation according to the time counting through a time synchronization protocol to realize time synchronization.

2. The method according to claim 1, wherein the step of performing time compensation according to the time counting to realize time synchronization comprises:
setting the time counting to be a time counting scale, and performing the time compensation according to the time counting scale to realize the time synchronization.

3. The method according to claim 1 or 2, wherein when a clock of a net element node among the net element nodes is switched, the method further comprising:
the time compensation of the net element node being stopped, and the net element node performing the time counting by using a clock synchronization signal generated by a fixed and stable frequency source rather than the locked clock synchronization signal.

4. The method according to claim 3, wherein when the clock of the net element node is switched, the method further comprising:
the net element node performing the time counting by using a relocked clock synchronization signal and performing the time compensation to the net element node.

5. The method according to claim 1, wherein
a lower-level net element node, which is connected with an upper-level net element node incapable of providing a clock synchronization signal, calibrates and operates a time signal of its local clock according to a message including time information from the upper-level net element node and clock frequency of the lower-level net element node.

6. A time synchronization apparatus, comprising a locking module, a first counting module and a compensating module which are sequentially connected, wherein
the locking module is used for locking a clock synchronization signal of an upper-level net element node through a physical channel;
the first counting module is used for performing time counting by using the locked clock synchronization signal; and
the compensating module is used for performing time compensation according to the time counting through a time synchronization protocol to realize time synchronization.

7. The apparatus according to claim 6, wherein the compensating module comprises a setting sub-module and a compensating sub-module connected with each other;
the setting sub-module is used for setting the time counting to be a time counting scale; and
the compensating sub-module is used for performing the time compensation according to the time counting scale to realize the time synchronization.

8. The apparatus according to claim 6 or 7, further comprising a first control module connected with the compensating module, wherein
the first control module is used for controlling whether to perform the time compensation to a net element node; wherein, when a clock of a net element node is switched, the first control module controls the compensating module to stop performing the time compensation to the net element node.

9. The apparatus according to claim 6 or 7, further comprising a second control module connected with the first counting module, and a second counting module connected with the second control module, wherein
the second control module is used for controlling whether to perform the time counting by using the locked clock synchronization signal; and
the second counting module is used for performing the time counting by using a clock synchronization signal generated by a fixed and stable frequency source under the condition that the second control module determines not to use the locked clock synchronization signal to perform the time counting.

10. The apparatus according to claim 6, further comprising:
a recovery module which is used for recovering a clock according to a message including time information from an upper-level net element node incapable of providing a clock synchronization signal; and
a calibrating module which is used for calibrating and operating a time signal of a local clock according to clock frequency recovered by the recovery module.
